# EUROPEAN PATENT APPLICATION

(11) **EP 4 583 378 A1**
(43) Date of publication of application: **09.07.2025**
(21) Application number: 25150347.0
(22) Date of filing: 06.01.2025
(51) Int. Cl.: H02K 7/10, H02K 7/106

(54) **ROLLER SHUTTER EQUIPMENT, MOTOR AND BRAKE DEVICE**

(30) Priority: 08.01.2024 CN 202420052931 U; 10.04.2024 CN 202420731021 U
(71) Applicant: Johnson Electric International AG, 3280 Murten (CH)
(72) Inventor: Zhao, Sijun, Shen Zhen (CN); Zhang, Pingman, Shen Zhen (CN); Dai, Lang, Shen Zhen (CN); Cui, Tingwang, Shen Zhen (CN); Qi, Jin, Shen Zhen (CN); Tsang, Saiki, Hong Kong (CN); Qiao, Tong, Shen Zhen (CN); Chen, Dengfeng, Shen Zhen (CN)
(74) Representative: Doherty, William

(57) **Abstract**

The invention discloses a roller shutter equipment, a motor and a brake device, The brake device is used for braking rotor. The brake device includes a permanent magnet and a magnetic conductor, one of the permanent magnet and the magnetic conductor is used for connecting the rotor and the other one is used for connecting the stator. The permanent magnet includes N magnetic poles, the magnetic conductor includes N slots, the brake device constitutes a N poles N slots structure, where N is an integer greater than 1. The brake device is applied to motor and roller shutter equipment, it realizes rapid braking, at the same time it can effectively reduce the vibration frequency of the motor and avoid the vibration frequency of the cover shell of the roller shutter equipment. It avoids resonance, ensures normal operation of the motor and reduces motor noise during operation.

## Description

### TECHNICAL FIELD

This invention relates to technical field of a roller shutter equipment, especially relates to a brake device and a roller shutter motor using the brake device.

### BACKGROUND

As a conversion device between electrical energy and mechanical energy, motors are widely used in our life, such as in automobiles, refrigerators, air conditioners, fans, roller shutters.

When the motor drives a roller shutter, it is necessary to use a brake device to ensure the roller shutter could stop running immediately and stay in the position when power is off as it needs to solve the problem of continuous rotation and inaccurate positioning caused by the inertia of the rotor after high-speed rotation. In existing structures, the brake devices are usually mechanical such as brake block which brings some problems like complex structure, assembly trouble and large noise and so on.

### SUMMARY

The purpose of the present invention is to provide a brake device capable of reducing noise, a motor using the brake device and a roller shutter equipment using the motor.

On one hand, this invention provides a brake device for braking a rotor, the brake device comprises a permanent magnet and a magnetic conductor, one of the permanent magnet and the magnetic conductor is used to connect the rotor, and the other one is used to connect a stator, the permanent magnet comprises N magnetic poles, the magnetic conductor comprises N slots arranged at circumferential interval, the brake device forms a structure of N poles and N slots, where N is an integer greater than 1.

In some embodiments, the permanent magnet is used to connect the rotor, the magnetic conductor is used to connect the stator, and the magnetic conductor surrounds the permanent magnet.

In some embodiments, the brake device is a 2-poles 2-slots structure, a space of long strip is defined within the magnetic conductor, the permanent magnet is installed in the middle of the space, and two ends of the space define two slots respectively.

In some embodiments, the space is a racetrack shape, the inner wall surface of the magnetic conductor around the space includes two planes respectively located on opposite sides of the permanent magnet and two surfaces respectively connected the end of the two planes, the length of the plane is greater than the outer diameter of the permanent magnet, and the position of the two surfaces forms the two slots.

In some embodiments, the middle of each of the planes is further depressed to form a curved surface, and the curved surface clearance fit with the peripheral surface of the permanent magnet to form an air gap.

In some embodiments, the curved surface is coaxial with the outer surface of the permanent magnet, and the air gap is a uniform air gap with a constant width in the direction of peripherals.

In some embodiments, the brake device is a 2-poles 2-slots structure, and the magnetic conductor comprises two magnetic conductive elements symmetrically arranged on the opposite side of the permanent magnet, each of the magnetic conductive elements is cylindrical, and the axis of the magnetic conductive elements are parallel to the axis of rotating shaft.

In some embodiments, the brake device is a N-poles N-slots structure, where N is an integer greater than 2. The permanent magnet including N magnetic poles arranged the circumference is fixed on the stator. The magnetic conductor comprises a connection part fixed on the motor rotating shaft and N magnetic conductive elements extending from the connection part, the N magnetic conductive elements are arranged at circumferential interval to form N slots.

In some embodiments, each of the magnetic conductive element is substantially fan-shaped, and each of the slots is substantially U-shaped.

In some embodiments, the magnetic conductive element is made of an entire piece of magnetic conductive material or a plurality of silicon steel sheets.

In some embodiments include a shell seat which is used to install the magnetic conductor. One of the inner walls of the shell seat and the outer wall of the magnetic conductor is configured with at least one bump, and the other one is configured with at least one corresponding groove. The bump is inserted into the groove and then the shell seat and the magnetic conductor are fixed.

In some embodiments, include a shell seat which is used to install the magnetic conductor, the shell seat and the stator are fixed connection, the connection position of shell seat and the stator is staggered with the connection position of the shell seat and the magnetic conductor.

In some embodiments, the permanent magnet is annular arranged on a sleeve. The rotor comprises a rotating shaft, and the sleeve is fixed on the rotating shaft.

On the other hand, this invention also provides a motor comprising a stator, a rotor rotating to the stator and the above brake device.

In some embodiments, the rotor is configured with at least one positioning magnetic ring, and the positioning magnetic ring and the brake device are respectively arranged at the opposite end of the rotor.

On the other hand, the invention also provides a roller shutter equipment, which comprises a cover shell, a motor arranged in the cover shell and a curtain driven by the motor.

In some embodiments, the motor is a tubular motor, and the self-locking frequency of the brake device is less than 200Hz.

Compared with the prior art, the brake device in this invention uses magnetic brake device with N-poles N-slots structure. The structure is simple and convenient to assemble. The present invention realizes rapid braking, at the same time it can reduce the vibration frequency of the motor effectively to avoid the vibration frequency of the cover shell of the roller shutter equipment, avoid resonance, ensure the normal operation of the motor and reduce the motor noise during operation.

### BRIEF DESCRIPTION OF THE DRAWINGS

The invention will be disclosed more clearly with reference to below drawings:
Fig.1 is a schematic view of a motor in present invention.
Fig.2 is an exploded view of the motor shown in Fig.1.
Fig.3 is another exploded view of the motor shown in Fig.1.
Fig.4 is a further exploded view of a brake device of the motor shown in Fig.1.
Fig. 4a is a view of Fig.4 in another angle.
Fig.5 is a flat view of the brake device as shown in Fig.4.
Fig.5a is the plane view of the magnetic conductor and permanent magnet of the brake device shown in Fig.4.
Fig.6 is a schematic view of another embodiment of the motor in this invention.
Fig.7 is an exploded view of the motor shown in Fig.6.
Fig.8 is a further exploded view of the brake device of the motor shown in Fig.6.
Fig.9 is a flat view of the brake device shown in Fig.8.
Fig.9a is a simplified schematic of the brake device shown in Fig.8.
Fig. 10 is a schematic view of a further embodiment of the motor in this invention.
Fig.11 is a schematic view of another embodiment of the brake device of the present invention.
Fig.12 is a schematic view of another embodiment of the brake device of the present invention.
Fig. 13 is a flat view of the brake device as shown in Fig.12.

### DETAILED DESCRIPTION

In order to facilitate the understanding of the present invention, a more comprehensive description of present invention will be given with reference to the abovementioned figures. One or more embodiments of the invention are given by examples in the figures to facilitate a more accurate and thorough understanding of the technical solutions disclosed in the present invention.

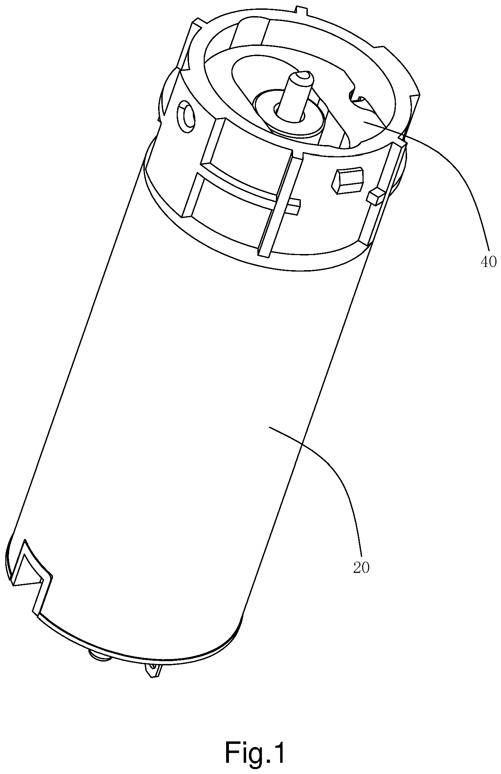

The present invention provides a motor, especially a tubular motor using roller shutter equipment such as roller shutter door, roller shutter window, roller shutter projector, etc. A specific embodiment of the motor of the present invention is shown in Fig.1 to Fig.3, comprising a stator 20, a rotor 30 rotating to the stator 20, and a brake device 40. In this embodiment, the rotor 30 is rotationally positioned in the center of the stator 20 to form an inner rotor motor. The brake device 40 is used for braking the rotor 30 of the motor to keep the rotor 30 from rotating under the action of inertia when the motor is powered off, and keeps the load (such as roller window, screens, etc.) from sliding due to its own heavy weight.

The stator 20 comprises a stator shell 22 and a plurality of stator magnetic poles 24 arranged on the inner wall of the stator shell 22. The stator magnetic poles 24 form several alternating N(north) poles and S(south) poles around the circumference of the stator shell 22. Preferably, the stator shell 22 is a cylindrical structure with one end closed and one end open, which can facilitate the assembly of the rotor 30. The rotor 30 comprises a rotating shaft 32, an iron core 34 arranged around the rotating shaft 32, and coil 36 wound around the iron core 34. The end of the rotating shaft 32 extends outward from the center of the stator shell 22 to connect the brake device 40 and the load, etc. When the motor starts, the coil 36 of the rotor 30 is energized and produces a periodically changing magnetic field, which acts with the magnetic field of the stator 20 to drive the rotor 30 rotating relative to the stator 20, and then drives the connected load such as the curtain.

In this embodiment, a commutator 38 is also provided on the rotating shaft 32 of the rotor 30.The commutator 38 comprises a plurality of commutator plates arranged along circumferential interval of the rotating shaft 32, and the commutator plates are connected with the coil 36 of the rotor 30.The stator 20 also comprises a carbon brush 26, and the carbon brush 26 is elastically connected with the commutator 38. When the rotor 30 rotates relative to the stator 20, each commutator plate contacts or separates from the carbon brush 26 alternatively, so that the corresponding coil 36 is energized or disconnected sequentially, and then makes a periodically changing magnetic field. In this illustrated embodiment, the open end of the stator shell 22 is configured with an end cover 28, the carbon brush 26 is arranged on the end cover 28 and terminals 29 connecting external power supply extend out from the end cover 28.

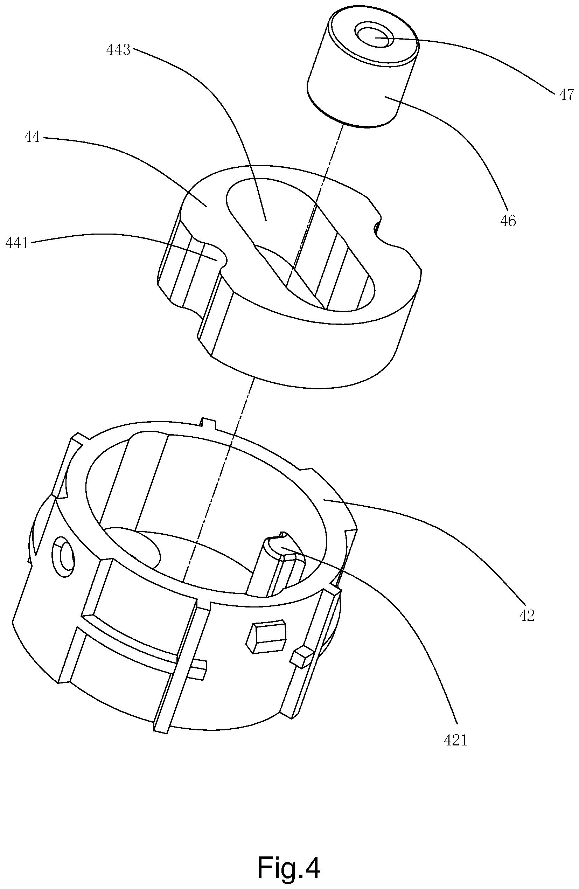

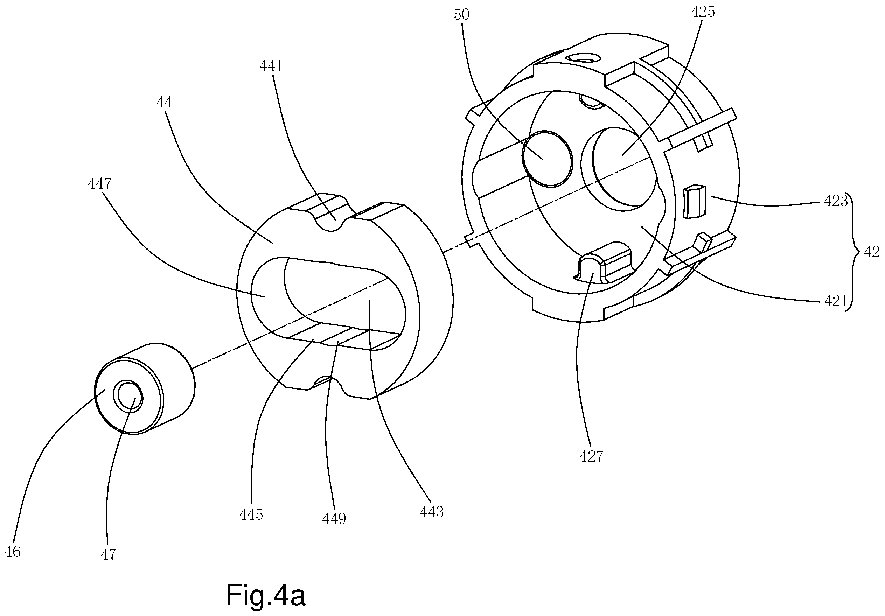

Referring to Fig.4 and Fig.4a, the brake device 40 comprises a shell seat 42, a magnetic conductor 44 fixed in the shell seat 42, and a permanent magnet 46 rotationally arranged on the magnetic conductor 44. The shell seat 42 is a cylindrical barrel structure, and the outside diameter of the shell seat 42 is equivalent to the outside diameter of the stator shell 22. The shell seat 42 comprises a bottom plate 421 and a side plate 423 arranged around the bottom plate. The bottom plate 421 and the side plate 423 are enclosed together to form a space to mount the magnetic conductor 44 and the permanent magnet 46. The rotating shaft 32 of the rotor 30 pass through a hole 425 configured in the center of the bottom plate 421. One end of the rotating shaft 32 extends into shell seat 42 to connect with the permanent magnet 46. The rotating shaft 32 and permanent magnet 46 can be fixed together by tight fitting, bonding, welding, etc., so that the permanent magnet 46 can rotate synchronously with the rotating shaft 32.

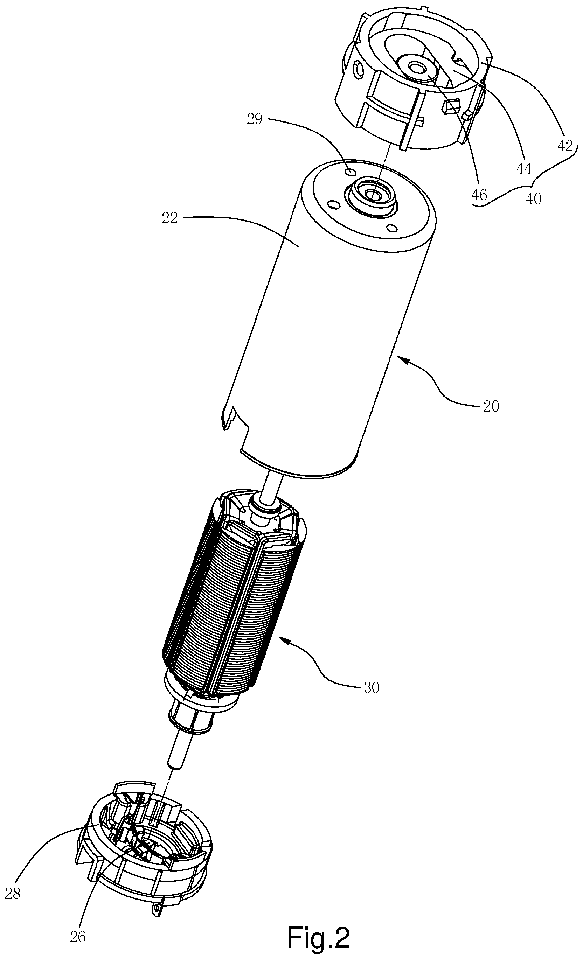

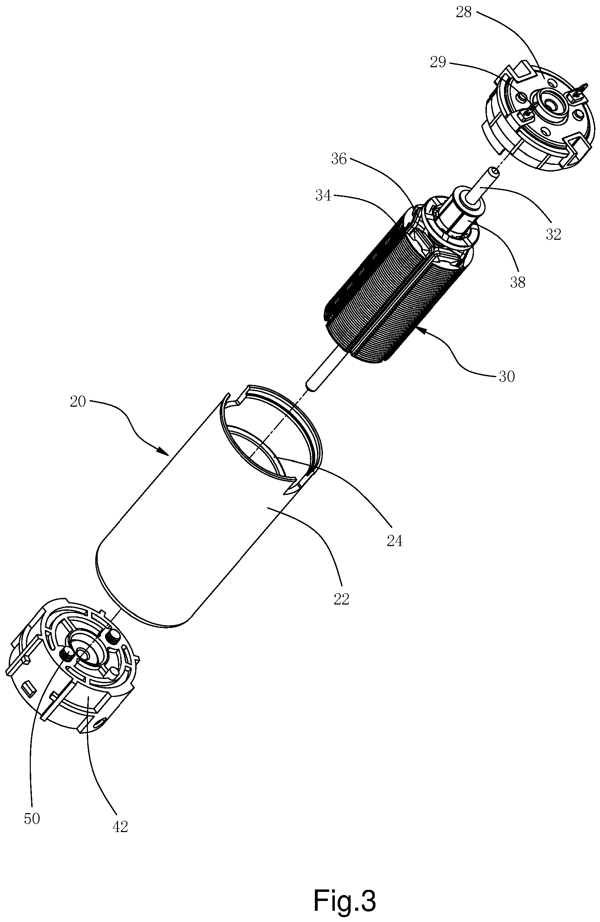

As shown in Fig.2 and Fig.3, the closed end of the stator shell 22 is provided with at least one fixed hole 29, at least one fixed part 50(such as screw) corresponding to the fixed hole 29 passes through the bottom plate 421 of the shell seat 42 and screws in the fixed hole 29, then the shell seat 42 could be connected to the outside of the closed end of the stator shell 22. The magnetic conductor 44 and the permanent magnet 46 are installed in the shell seat 42. The permanent magnet 46 opposite to the magnetic conductor 44 is set on the rotating shaft 32 to assemble with the brake device 40. In some embodiments, the shell seat 42 and the stator shell 22 can also be connected together by means of fasteners, etc., or can even be an integrated structure. After assembly the motor constitutes a tubular motor which can be arranged in the cover shell of the roller shutter equipment conveniently.

The magnetic conductor 44 is made of magnetic conductive materials, such as but not limited to pure iron, magnetic conductive stainless steel, low carbon steel, etc. In some embodiments, the magnetic conductor 44 is an iron block. In some embodiments the magnetic conductor 44 includes a number of silicon steel sheets stacked in a cylindrical shape. In this illustrated embodiment, the outer wall of the magnetic conductor 44 is provided with at least one groove 441, and the inner wall of the shell seat 42 protrudes to form at least one bump 427 inserted into the groove 441 which locates the magnetic conductor 44 in the shell seat 42. In other embodiments, at least one groove 441 can also be configured on the shell seat 42 and at least one bump 427 can be configured on the magnetic conductor 44 , and the installation of the magnetic conductor 44 can be achieved by same groove-bump match. Of course, the magnetic conductor 44 and the shell seat 42 can also be assembled in other ways, such as clamping, bonding, welding, etc.

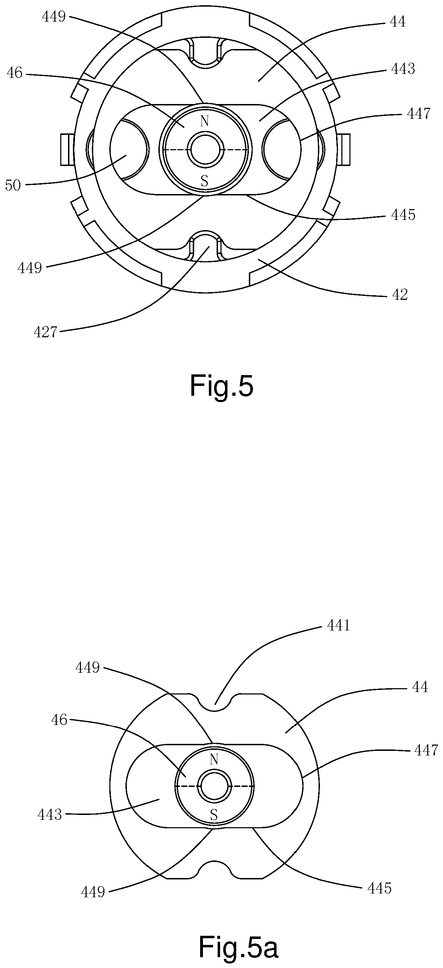

The permanent magnet 46 is made of permanent magnet material, such as NdFeb(neodymium iron boron), ferrite, etc. The permanent magnet 46 is cylindrical in shape with an assembly hole 47 arranged in the central of the permanent magnet 46. The permanent magnet 46 is fixed with the rotating shaft 32 through assembly hole 47 and is rotationally arranged in the center of the magnetic conductor 44 after assembly with the motor. In this embodiment, the brake device 40 is defined as a 2-poles 2-slots structure, the permanent magnet 46 comprises two magnetic poles, a N(north) pole and a S(south) pole are set relative to each other, each magnetic pole is substantially semi-circular. The interface position of the N pole and S pole of the permanent magnet 46 are indicated by dotted lines in Fig.5 and Fig.5a. A space 443 is arranged in the magnetic conductor 44 , and the space 443 substantially is a long strip structure, its width is slightly larger than the outer diameter of permanent magnet 46, and its length is much larger than the outer diameter of permanent magnet 46. The permanent magnet 46 is assembled in the middle of space, and two ends of the space 443 respectively define the two slots of the magnetic conductor 44.

In a specific embodiment, as shown in Fig.5a, the space 443 is substantially a racetrack shape structure, and the inner wall of the magnetic conductor 44 comprises two planes 445 set relative to each other and two surfaces 447 set relative to each other. The gap width of the two planes 445 is slightly larger than the outer diameter of the permanent magnet 46, and the length of each plane 445 is much larger than the outer diameter of the permanent magnet 46. The two surfaces 447 are respectively connected with the end of the plane 445, and the diameter of the two surfaces 447 is preferably not less than the outer diameter of the permanent magnet 46. After assembly, the two planes 445 are located on the opposite side of the permanent magnet 46 and clearance fit with the permanent magnet 46. There are two internals between the surfaces 447 and the peripheral surface of the permanent magnet 46, the intervals define the two slots of the magnetic conductor 44 , the magnetic conductor 44 constitutes two magnetic conductive elements delimited by the two slots, each of the magnetic conductive elements reacts with the magnetic pole of the permanent magnet 46.

The middle position of the planes 445 of the magnetic conductor 44 is further depressed to form a curved surface 449, and the curved surface 449 clearance fit with the peripheral surface of the permanent magnet 46. Preferably, the curved surface 449 and permanent magnet 46 are torus in coaxial, and an air gap of constant and uniform size is formed between them to further reduce the noise during the operation of the motor. When there is no external force, the center of the two magnetic poles of the permanent magnet 46 is located at the position of narrowest air gap, that is, the center of the two magnetic poles of the permanent magnet 46 directly face to the middle of the two planes 445 or the curved surface 449, as shown in Fig.5. At this position, the magnetic attraction between the permanent magnet 46 and the magnetic conductor 44 is strongest.

When the motor is powered on , the magnetic field reaction between the stator 20 and the rotor 30 makes the rotor 30 rotating, overcomes the magnetic attraction between the magnetic conductor 44 and the permanent magnet 46, and makes the permanent magnet 46 rotating synchronously with the rotating shaft 32 of the rotor 30. When the motor is powered off, the rotor 30 tends to rotate continuously due to rotating inertia. At this time the magnetic the permanent magnet 46 and the connected rotor 30 are attracted and positioned due to the attraction between the magnetic conductor 44 and the permanent magnet 46, which overcomes the rotating inertia and stops rotating immediately, so that the driven load stops running immediately and the rotor 30 is braked. It should be understood that after the motor is powered off, rotor 30 may rotate a small angle to make the center of the magnetic poles of the permanent magnet 46 rotating to a position of narrowest air gap, this basically will not make the load continue rotating.

When the motor is used in a roller shutter device, the motor is installed in the cover shell of the roller shutter device, and the rotating shaft 32 is connected to drive curtain. When the motor starts, the rotating shaft 30 drives the movement of the curtain to release or rewind. When the curtain moves to a desired position, the motor is powered off. At this time, the rotating shaft 32 of the motor can stop rotating immediately by using the brake device 40, the curtain can be adjusted and kept in the desired position accurately. Moreover, the brake device 40 in this embodiment is a 2-poles 2-slots structure with second order commutation peak value, which reduces the self-locking frequency(2 multiply (motor speed divide 60)) of the motor brake device to less than 200Hz to avoid the vibration frequency(usually above 200Hz) of the housing and resonance, ensures the normal operation of the motor and reduces the noise during the operation of the motor and improves the user experience. Moreover, the magnetic attraction can also prevent roller curtain sliding effectively due to its own heavy weight.

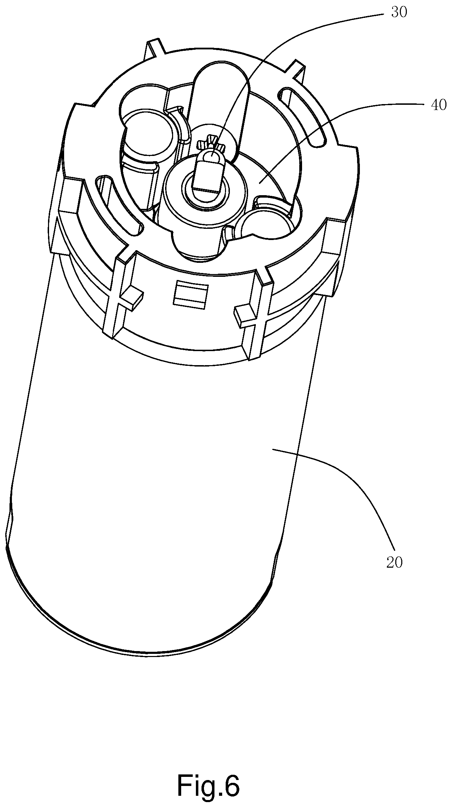

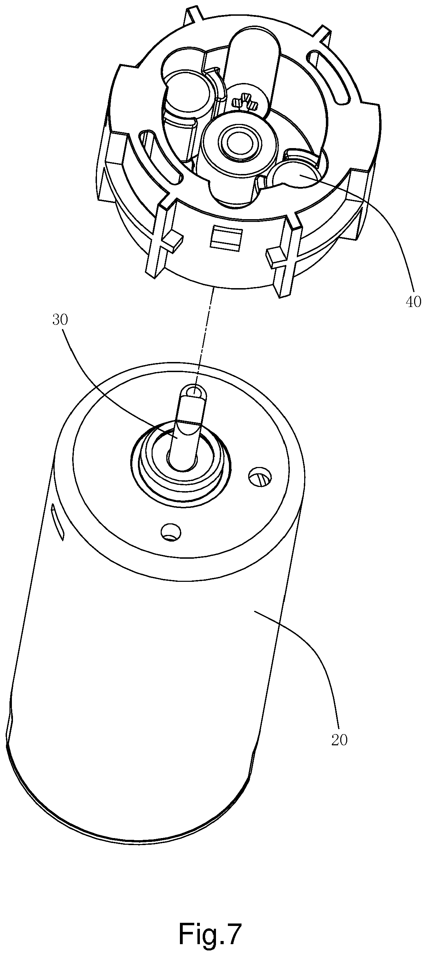

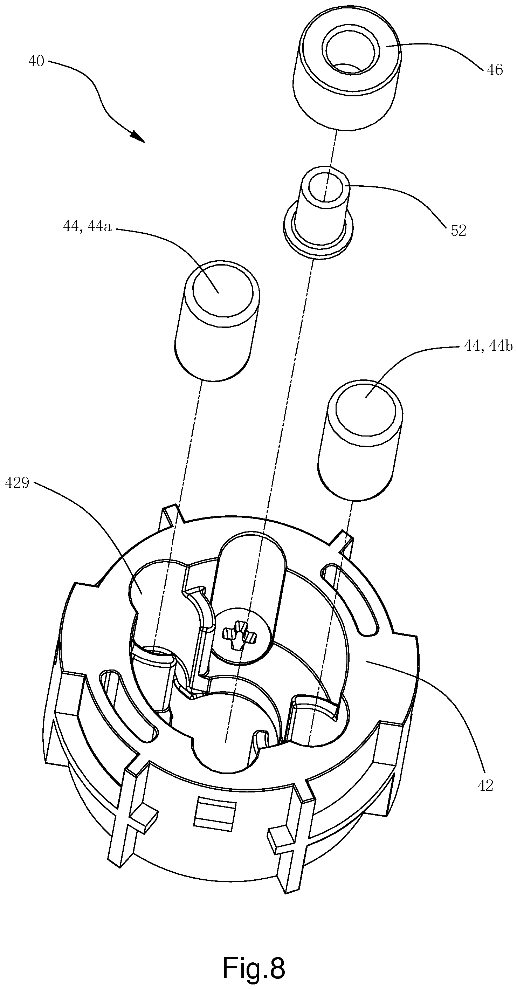

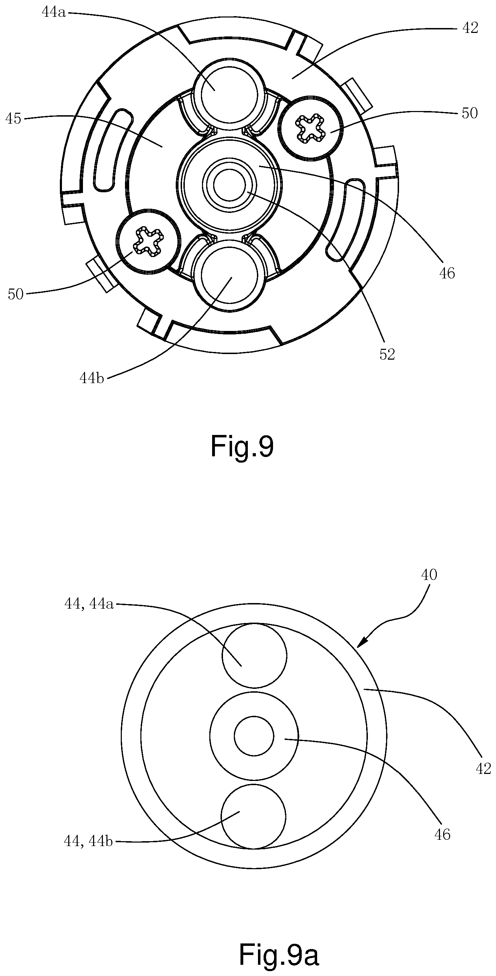

Fig.6 to Fig.8 shows another embodiment of the motor of the present invention, which differs from the previous embodiment mainly in the brake device 40. In this embodiment, the brake device 40 also comprises a shell seat 42, a magnetic conductor 44 and a permanent magnet 46 assembled in the shell seat 42. The magnetic conductor 44 is no longer a long strip structure but is composed of two magnetic conductive elements 44a and 44b separately, and two virtual slots 45 are formed between the two magnetic conductive elements 44a and 44b, as shown in Fig.9 and Fig.9a. Specifically, the two magnetic conductive elements 44a and 44b are cylindrical, and the axis of magnetic conductive elements 44a and 44b are parallel to the axis of rotating shaft 32 of the rotor and the axis of the permanent magnet 46, two non-uniform air gaps are formed between the magnetic conductive elements 44a,44b and magnetic poles of the permanent magnet 46.

In this embodiment, two mounting parts 429 are configures on the shell seat 42 respectively corresponding to the two magnetic conductive elements 44a and 44b. The shape and size of the two mounting parts 429 are matched with the two magnetic conductive elements 44a and 44b, and magnetic conductive elements 44a and 44b can be fixed in the mounting parts 429 by tight fitting or bonding. In some embodiments, the shell seat 42 can be made by over molding. The magnetic conductive elements 44a and 44b are placed inside the mold preliminary during molding the shell seat 42, so that the mounting parts 429 of the shell seat 42 can fix the magnetic conductive elements 44a and 44b together during molding, this can simplify the assembly process.

Preferably, as shown in Fig.9, At least one fixed part 50 in the shell seat 42 is staggered from the mounting parts 429, so that the assembly of shell seat 42 with the stator shell 22 does not affect the assembly of shell seat 42 with the magnetic conductive elements 44a and 44b. During assembly the shell seat 42 is connected with the stator shell 22 first through fixed part 50, and then the magnetic conductive elements 44a and 44b are assembled with the shell seat 42. Or the magnetic conductive elements 44a, 44b are assembled with the shell seat 42 first through the mounting parts 429 of the shell seat 42 and then the shell seat 42 are assembled with the stator shell 22 through the fixed part 50. As another way shown in Fig.9a, if the assembly position of the fixed part 50 and the shell seat 42 are overlapped with the position of mounting parts 429, it is necessary to assemble the shell seat 42 and the stator shell 22 first, and then assemble the magnetic conductive elements 44a ,44b on the shell 42. The assembly method of the structure shown in Fig.9 is easier to operate than the structure shown in Fig. 9a and is conducive to improving production efficiency.

In this embodiment, the inner diameter of permanent magnet 46 is greater than the diameter of rotating shaft 32, a sleeve 52 arranged between permanent magnet 46 and rotating shaft 32 can be made of plastic, metal, etc., the permanent magnet 46 can be assembled to the sleeve 52 first by tight fit, glued, etc and then connect the sleeve 52 with the rotating shaft 32 to complete the assembly of permanent magnet 46 and rotating shaft 32. Usually, annular permanent magnet 46 is brittle and easy to crack if assemble with rotating shaft 32 directly. Assembling the permanent magnet 46 through sleeve 52 can effectively avoid cracking problems.

After assembly, the magnetic conductive elements 44a and 44b symmetrically arranged on opposite side of the permanent magnet 46 are separated from the permanent magnet 46. When the motor is powered off, attraction force between the two magnetic poles of the permanent magnet 46 and the two slots of the magnetic conductive elements 44a, 44b brake the rotor 30.

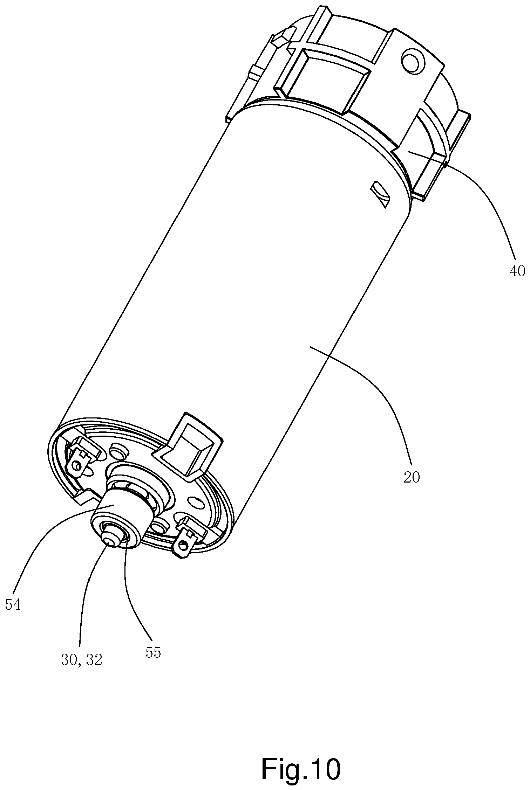

Fig.10 shows another embodiment of a motor for the present invention, the structure is basically the same as the previous embodiment. The difference is that the motor in this embodiment comprises at least one positioning magnetic ring 54 and at least one sensor (not shown in the figure), the sensor is preferably a hall sensor which senses the speed and position of the motor by sensing the change of the magnetic field of the positioning magnetic ring 54. Specifically, the positioning magnetic ring 54 is fixed on the rotating shaft 32 of the rotor 30 to rotate synchronously. Preferably, the positioning magnetic ring 54 and the brake device 40 are at opposite end of shaft 32. Preferably, the positioning magnetic ring 54 is configured inside a sleeve 55, and the sleeve 55 is assembled with the rotating shaft 32 to avoid the cracking problems effectively of the positioning magnetic ring 54 during the assembly process.

The above take 2-poles 2-slots structure as examples to illustrate the structure, function and effect of the brake device 40. In some embodiments, the number of slot pole of the brake device 40 can be adjusted adaptively according to needs.

In some embodiments the brake device 40 is a N-poles N-slots structure, where N is an integer greater than 2, the permanent magnet 46 is fixed on the stator 20, including N magnetic poles arranged on the circumference, the magnetic conductor 44 comprises a connection part 440 fixed on a rotating shaft 32 of the rotor 30 and N magnetic conductive elements extending from the connection part 440, and the N magnetic conductive elements are arranged at circumferential interval to form N slots.

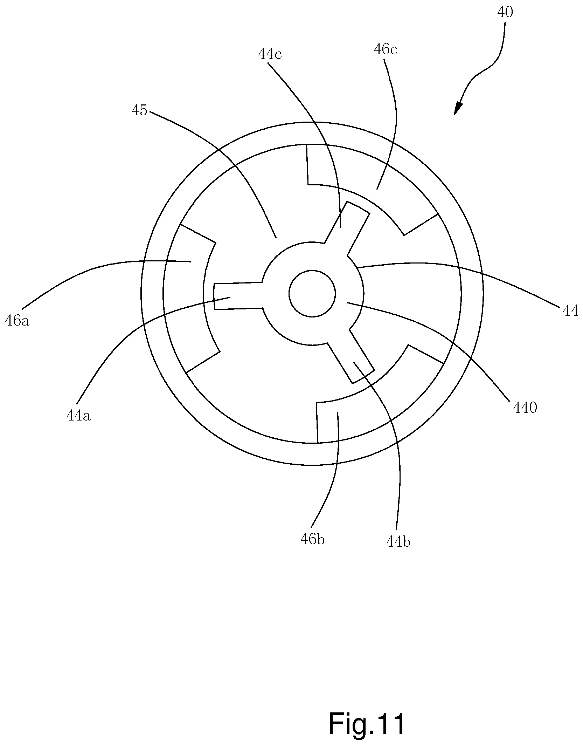

In the embodiments shown in Fig11, the brake device 40 is configured as a 3-poles 3-slots structure, the permanent magnet 46 includes three magnetic poles 46a, 46b, 46c, and the three magnetic poles 46a, 46b, 46c are preferably fixed on the shell seat 42 or the stator 20 and arranged at peripherally intervals. The magnetic conductor 44 is connected with rotating shaft 32 of the rotor 30, including a connection part 440 fixed on the rotating shaft 32 and three magnetic conductive elements 44a, 44b and 44c extending from the connection part 440, and the three magnetic conductive elements 44a, 44b, 44c are arranged at circumferential interval to form three slots 45. In this embodiment, magnetic conductive elements 44a, 44b, 44c are substantially in the shape of a radioactive strip, and the three slots 45 are substantially in the shape of a fan ring.

The three magnetic poles 46a, 46b, 46c of permanent magnet 46 generate magnetic attraction corresponding to the magnetic conductive elements 44a, 44b, 44c during braking. The brake device 40 in the present embodiment can also reduce the vibration frequency of the motor and avoid the generation of resonance.

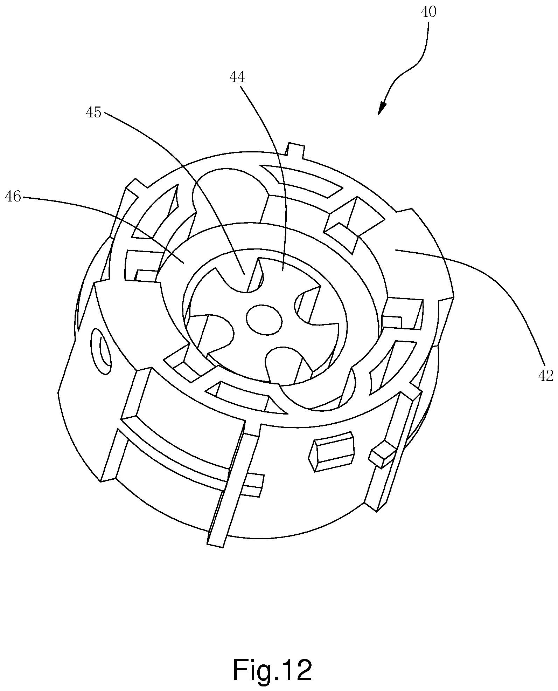

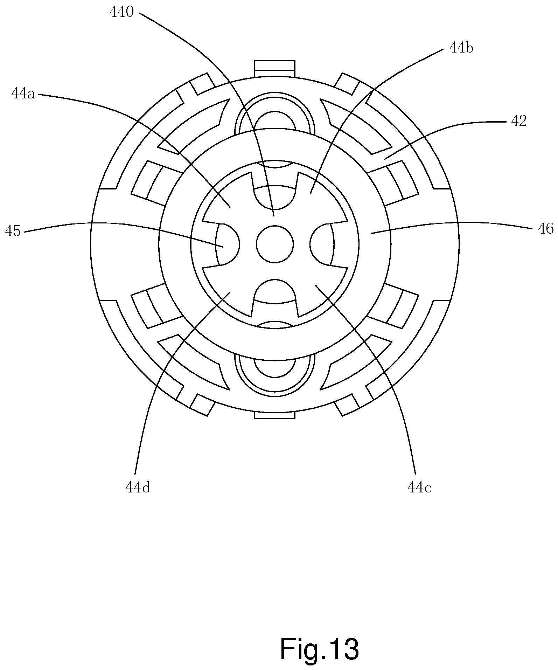

In the embodiment shown in Fig.12 to Fig.13, the brake device 40 is configured as a 4-poles 4-slots structure, the permanent magnet 46 includes four magnetic poles fixed in the shell seat 42 and arranged along the circumference of the shell seat 42. Preferably, the permanent magnet 46 is a ring configuration. The magnetic conductor 44 including a connection part 440 fixed on the rotating shaft 32 and four magnetic conductive elements 44a, 44b, 44c, 44d extending from the connection part 440 radially is connected with the rotating shaft 32 of the rotor 30. The magnetic conductive elements 44a, 44b, 44c, 44d are arranged at peripheral intervals to form four slots 45. In this embodiment, each magnetic conductive element of 44a, 44b, 44c, 44d is substantially fan-shaped, and the four slots 45 are substantially U-shaped.

Each of the magnetic poles generates magnetic attraction corresponding to one of the magnetic conductive elements 44a, 44b, 44c, 44d during braking. The brake device 40 in the present embodiment can also reduce the vibration frequency of the motor and avoid the generation of resonance.

It should be understood that the brake device 40 can be a N-poles N-slots structure, where N is an integer greater than 1. Each magnetic pole of the permanent magnet 46 faces to the magnetic conductive elements of the magnetic conductor 44 directly during braking, which can generate greater magnetic attraction force so that the rotor stops rotating immediately and prevents the curtain from sliding.

In the above embodiments, the motor uses a brushed motor as examples to illustrate, and it can be understood that the motor braking is not limited to a brushed motor but can also be a brushless motor.

It should be noted that the above embodiments only disclose the preferred embodiments of this invention.

## Claims

1. A brake device (40), which is used for braking a rotor (30), wherein the brake device (40) comprises a permanent magnet (46) and a magnetic conductor(44), wherein one of the permanent magnet (46) and the magnetic conductor(44) is configured to connect the rotor (30), and the other one is configured to connect a stator (20), the permanent magnet (46) comprises N magnetic poles, the magnetic conductor (44) comprises N slots arranged at circumferential interval, the brake device (40) forms a N poles N slots structure, where N is an integer greater than 1.

2. The brake device (40) according to claim 1, wherein the permanent magnet (46) is used to connect the rotor (30), the magnetic conductor (44) is used to connect the stator (20), and the magnetic conductor (44) surrounds the permanent magnet (46).

3. The brake device (40) according to claim 2, wherein the brake device (40) is a 2-poles 2-slots structure, a space of long strip is defined within the magnetic conductor (44), the permanent magnet (46) is installed in the middle of the space, two ends of the space define two slots.

4. The brake device (40) according to claim 3, wherein the space is a racetrack shape, the inner wall of the magnetic conductor (44) around the space comprises two planes located on the opposite sides of the permanent magnet (46) respectively and two surfaces connected the end of the two planes respectively, the length of each of the two planes is greater than the outer diameter of the permanent magnet (46), the positions of the two surfaces define the two slots.

5. The brake device (40) according to claim 4, wherein the middle of each plane is further depressed to form a curved surface (449), and the curved surface (449) clearance fit with the peripheral surface of the permanent magnet (46) to form an air gap.

6. The brake device (40) according to claim 2, wherein the brake device (40) is a 2-poles 2-slots structure, the magnetic conductor (44) comprises two magnetic conductive elements symmetrically arranged on opposite sides of the permanent magnet (46), each of the magnetic conductive elements is cylindrical, the rotor (30) comprises a rotating shaft (32), and the axis of the magnetic conductive elements are parallel to the rotating shaft (31) of the rotor (30).

7. The brake device (40) according to claim 1, wherein the brake device (40) is a N-poles N-slots structure, where N is an integer greater than 2, the permanent magnet (46) is fixed on the stator (20), including N magnetic poles arranged on the circumference, the magnetic conductor (44) comprises a connection part (440) fixed on a rotating shaft (32) of the rotor (30) and N magnetic conductive elements extending from the connection part (440), and the N magnetic conductive elements are arranged at circumferential interval to form N slots.

8. The brake device (40) according to claim 7, wherein each of the magnetic conductive elements is substantially fan-shaped, and each of the slots is substantially U-shaped.

9. The brake device(40) according to claim 6, wherein the brake device (40) comprises a shell seat (42) used to install the magnetic conductor (44), one of the inner walls of the shell seat (42) and the outer wall of the magnetic conductor(44) is provided with at least one bump (427), and the other one is corresponding provided with at least one groove (441), the bump (427) is inserted into the groove (441) and then the shell seat (42) and the magnetic conductor (44) are fixed.

10. The brake device (40) according to claim 2, wherein the brake device (40) comprises a shell seat (42) used to install the magnetic conductor (44), the shell seat (42) and the stator (20) are fixed, the connection position of shell seat (42) and the stator (20) is staggered with the connection position of the shell seat (42) and the magnetic conductor (44).

11. The brake device (40) according to claim 2, wherein the permanent magnet (46) is annular arranged on a sleeve (52), the rotor comprises a rotating shaft (32), and the sleeve (52) is fixed on the rotating shaft.

12. A motor, comprises a stator (20) and a rotor (30) rotated relative to the stator (20), wherein the motor comprises the brake device (40) according to claim 1 to claim 11.

13. The motor according to claim 12, wherein the rotor (30) comprises at least one positioning magnetic ring (54), the positioning magnetic ring (54) and the brake device (40) are arranged at the opposite end of the rotor (30).

14. A roller shutter equipment comprises a cover shell, a motor arranged on the cover shell and a curtain driven by the motor according to claim 12 or claim 13.

15. The roller shutter equipment according to claim 14, wherein the motor is a tubular motor, and the self-locking frequency of the brake device (40) is less than 200Hz.
